# EUROPEAN PATENT APPLICATION

(11) **EP 2 728 539 A1**
(43) Date of publication of application: **07.05.2014**
(21) Application number: 13275223.9
(22) Date of filing: 19.09.2013
(51) Int. Cl.: G06Q 30/06, G06F 3/147

(54) **Method of assigning price information to electronic shelf label tags and system thereof**

(30) Priority: 31.10.2012 KR 20120122613
(71) Applicant: Samsung Electro-Mechanics Co., Ltd, Suwon, Gyunggi-Do (KR)
(72) Inventor: Lee, Yun Jong, Gyunggi-do (KR); Woo, Seok Min, Gyunggi-do (KR); Sung, Jong Woo, Gyunggi-do (KR); Byun, Gi Young, Gyunggi-do (KR); Kim, Hyun Hak, Gyunggi-do (KR)
(74) Representative: Potter Clarkson LLP

(57) **Abstract**

There are provided a method of assigning price information to electronic shelf label tags capable of reducing the load on the system occurring during the process of changing price information, and a system thereof. The method for assigning price information to electronic shelf label tags includes: acquiring, by a mobile terminal, merchandise information; transmitting, by the mobile terminal, the merchandise information to an ESL server; transmitting, by the ESL server, price information corresponding to the merchandise information to the mobile terminal; transmitting, by the mobile terminal, the merchandise information and the price to an electronic tag; and displaying, by the electronic tag, the merchandise information and the price information.

## Description

### CROSS-REFERENCE TO RELATED APPLICATIONS

This application claims the priority of Korean Patent Application No. 10-2012-0122613 filed on October 31, 2012, in the Korean Intellectual Property Office, the disclosure of which is incorporated herein by reference.

### BACKGROUND OF THE INVENTION

### Field of the Invention

The present invention relates to a method of assigning price information to electronic shelf label tags and a system thereof, and more particularly, to a method of assigning price information to electronic shelf label tags capable of reducing load on the system occurring in an initial installation stage, and a system thereof.

### Description of the Related Art

In order to display and sell a large amount of articles in a retail space such as a discount store, labels are used to provide information regarding and prices of merchandise items. The most common way to use labels to date has been to write merchandise information necessary for selling such as price and discount information on paper by hand or print such information on paper in a standard format, so as to display the paper adjacently to the merchandise.

Although such a scheme seems to be simple, easy and less costly than an electronic tag system, in a situation such as a mass merchandising (big-box store) store in which information related to tens of thousands of merchandise items are displayed in a standard format and prices are frequently changed, using paper labels may not be an effective method. That is, when prices of some items among tens of thousands merchandise items are changed, it is necessary to identify the items, to write by hand or print the changed merchandise information (such as price), and then to go to locations within the store in which the merchandise items are displayed and correct or replace the labels.

Times and effort are required in preparing and replacing paper labels whenever the price of merchandise items are changed, and it is a problem in a mass merchandising store. That is, it is necessary to quickly, accurately and simply change merchandise information with minimal additional expenses.

Recently, to meet such a market need, an on-going attempt to replace existing paper labels with electronic labels using electronic devices has been underway. This is because the latter may change the above-described merchandise information quickly, accurately and simply by using communications and electronic display technologies.

The electronic tag is referred to as an electronic shelf label (ESL), an electronic price label (EPL), an electronic information label (EIL) or the like, depending on differences in the language used by, and the culture of organizations or countries in which electronic tag systems are is being developed.

An existing electronic shelf label system (referred hereinafter to as an ESL system) includes a server, a wired/wireless conversion device, and an electronic shelf label (hereinafter an electronic tag). The server includes a server that stores merchandise information and related management information necessary for operating the ESL system, and middleware that connects external devices and database to each other and arbitrates them.

One or more of the wired/wireless conversion device may be provided, depending on the size of the store. The wired/wireless conversion device serves to convert the information received from a server in a wired communications network into a wireless communications format so as to be transmitted to an end electronic tag, and collects necessary information from respective electronic tags to be transmitted to the server.

Respective electronic tags are located adjacently to merchandise items, and display information (mostly information related to price) necessary for sales promotion of the merchandise item.

In such an existing ESL system, when a price is set, a process of separately scanning information related to a merchandise item and a corresponding electronic tag to store the information in a database, transmitting the information from a server to electronic tags, and transmitting a signal indicating electronic tags are displaying updated information back to the server from the electronic tag, is performed.

In this regard, since all communications between the electronic tags and the servers pass through the middleware, it may be overloaded and thereby the speed thereof may be slowed down and performance deteriorated.

Accordingly, a solution to reduce load on the middleware and time consumed in changing price information is required.

### [Related Art Document]

(Patent Document 1) Korean Patent Laid-Open Publication No. 2011-0051076

### SUMMARY OF THE INVENTION

An aspect of the present invention provides a method of assigning price information to electronic shelf label tags capable of minimizing time consumed in replacing price information, and a system thereof.

According to an aspect of the present invention, there is provided an electronic shelf label system, including: a mobile terminal acquiring merchandise information regarding a merchandise item; an ESL server transmitting price information corresponding to the merchandise information to the mobile terminal; and an electronic tag acquiring the price and the merchandise information from the mobile terminal to be displayed, and transmitting identification information to the ESL server.

The mobile terminal may transmit the merchandise information and the price information to the electronic tag using near field communications (NFC).

The electronic tag may transmit the identification information to the ESL server using local area wireless communications.

The local area wireless communications may be Zigbee communications.

The mobile terminal may communicate with the ESL server using Wi-Fi communications.

The mobile terminal may include a barcode scanner to acquire the merchandise information.

According to another aspect of the present invention, there is provided a method for assigning price information to electronic shelf label tags, including: acquiring, by a mobile terminal, merchandise information; transmitting, by the mobile terminal, the merchandise information to an ESL server; transmitting, by the ESL server, price information corresponding to the merchandise information to the mobile terminal; transmitting, by the mobile terminal, the merchandise information and the price to an electronic tag; and displaying, by the electronic tag, the merchandise information and the price information.

The transmitting of the merchandise information and the price information may be performed using near field communications (NFC).

The method may further include transmitting, by the electronic tag, identification information to the ESL server using local area wireless communications.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a diagram schematically illustrating an electronic shelf label system according to an embodiment of the present invention;
FIG. 2 is a block diagram schematically illustrating an electronic tag according to an embodiment of the present invention;
FIG. 3 is a block diagram schematically illustrating a mobile terminal according to an embodiment of the present invention; and
FIG. 4 is a flowchart illustrating the method of setting merchandise information according to the embodiment.

### DETAILED DESCRIPTION OF THE INVENTION

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. Throughout the drawings, the same or like reference numerals will be used to designate the same or like elements..

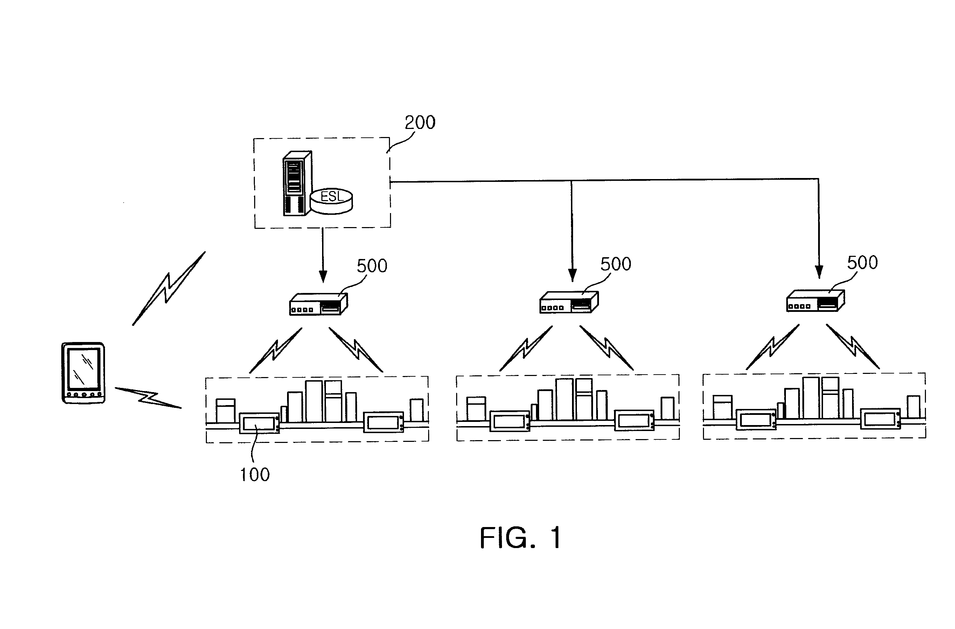

FIG. 1 is a diagram schematically illustrating an electronic shelf label system according to an embodiment of the present invention.

Referring to FIG. 1, the electronic shelf label (referred hereinafter to as ESL) system may include an ESL server 200 that stores and distributes data for managing merchandise items, an electronic tag 100 that receives merchandise information to display it on a display device, a relay 500 that relays information, and a mobile terminal 400 that acquires the merchandise information.

The ESL server 200 and the electronic tag 100 may establish a communications channel via the relay 500. The ESL server 200 and the relay 500 may be connected via a wired network such as an Ethernet network or via a wireless network such as a Wi-Fi network or by Zigbee communications.

The ESL server 200 may include a database that contains merchandise information and related management information necessary for operating the system, and middleware that connects external devices and the database to one another and arbitrates between them.

Further, the relay 500 and the electronic tag 100 may be connected to each other via a wireless network such as a Wi-Fi network, a Bluetooth network, and a Zigbee network. However, the relay 500 and the electronic tag 100 may be connected to each other via a wired network as necessary.

The electronic tag 100 is located on a shelf on which merchandise is arranged in s position in which it can be easily noticed by shopper, and may display information on the merchandise (e.g., the name and price of merchandise) arranged on an adjacent shelf.

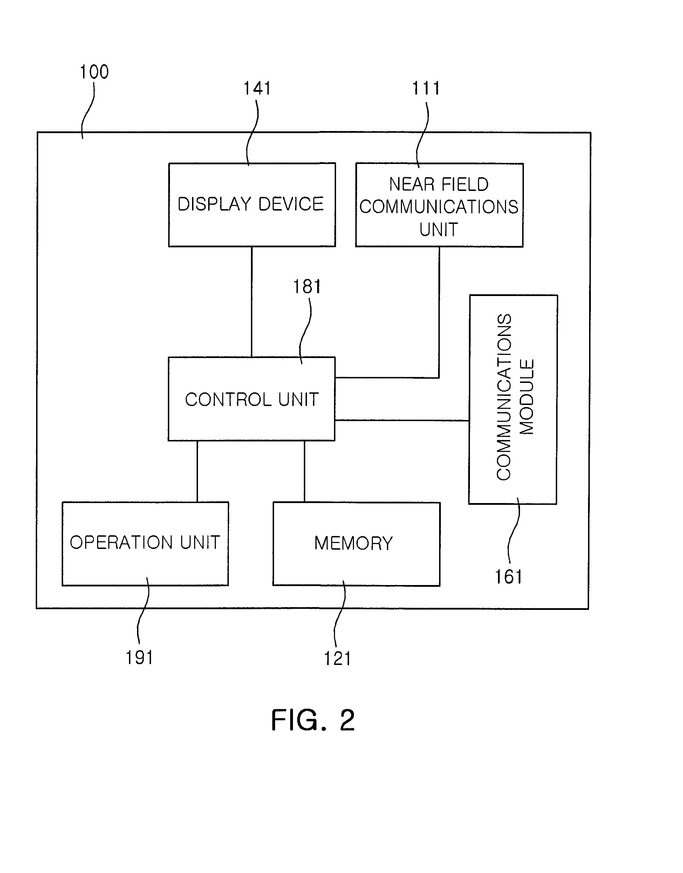

FIG. 2 is a block diagram schematically illustrating an electronic tag according to an embodiment of the present invention.

Referring to FIG. 2, the electronic tag 100 according to the embodiment of the present invention includes a near field communications unit 111 that communicates with the mobile terminal 400 to be described below, a memory 121 that stores information on merchandise; a display device 141 that displays information on merchandise stored in the memory, a communications module 161 that performs communications with the ESL server 200, and a control unit 181 that stores information received from the near field communications unit 111 in the memory, displays it on the display device 141, and transmits it to the ESL server 200 via the communications module 161.

In addition, the electronic tag may further include an operation unit 191 by which a manager may directly input merchandise information or command.

The near field communications unit 111 may use near field communications (NFC), and thereby may perform communications with a local area communications unit 411 of the mobile terminal 400.

The display device 141 may include a LCD, a PDP, a LED, a CRT and the like.

In FIG. 1, the communications module of the ESL server 200 may perform communications with the electronic tag 100 via separate relays 500 through the middleware. Therefore, if the relay 500 supports near field communications such as Bluetooth and Zigbee, the communications module 161 of the electronic tag 101 may be a near field communications module.

In addition, if the ESL server 200 and the electronic tag 100 are directly connected to each other via a wired network such as the Ethernet, the communications module 161 of the electronic tag 101 may be a LAN card for a wired network.

The operation unit 191 serves to receive instruction from a store manager to instruct the electronic tag 101 to perform the task of inputting merchandise information. The operation unit 191 may be implemented as a keypad-type user interface.

The control unit 181 may control the overall operations of the component of the electronic tag 101. In particular, the control unit 181 may display merchandise information on the display device 141 upon receiving a request to set merchandise information from a manger, or may transmit it to the ESL server 200.

The mobile terminal 400 may be connected to the ESL server 200 via a wireless network. Further, the mobile terminal 400 may be connected to the electronic tag 100 via local area wireless communications (e.g., NFC).

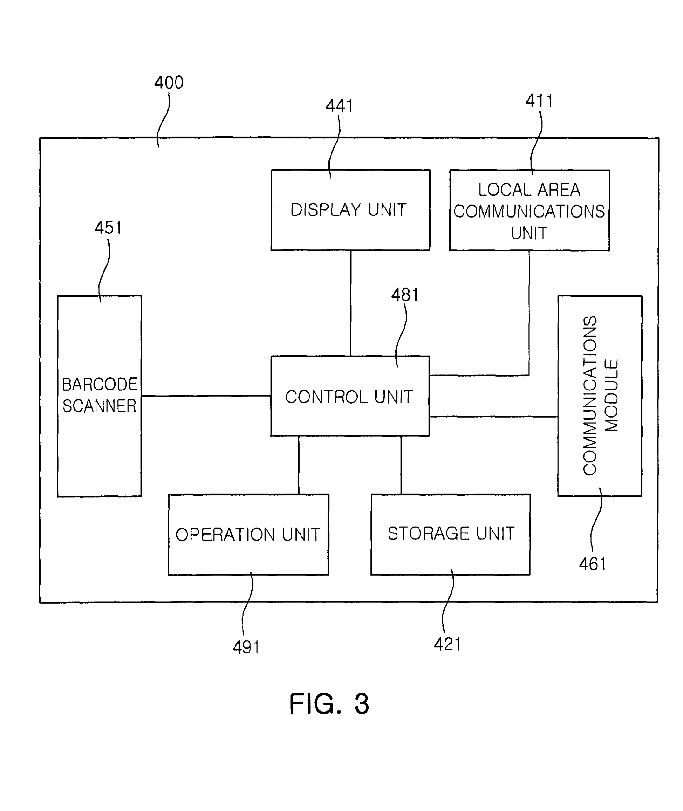

FIG. 3 is a block diagram schematically illustrating a mobile terminal according to an embodiment of the present invention.

Referring to FIG. 3, the mobile terminal 400 according to the embodiment may include a local area communications unit 411 that communicates with the electronic tag 100, a storage unit 421 that stores information on the price of merchandise and the like, a display unit 441 that displays various kinds of information to a manager, a communications module 431 that performs communications with the ESL server 200, a barcode scanner 451 that scans merchandise information, and a control unit 481 that stores information input through the barcode scanner 451 in the storage unit 421 while transmitting it to the ESL server 200 via the communications module 461, and transmits price information acquired by the ESL server 200 to the electronic tag 100 via the local area communications unit 411.

In particular, the mobile terminal 400 according to the embodiment may be configured so that the local area communications unit 411 uses near field communications (NFC).

The mobile terminal 400 according to the embodiment may easily acquire merchandise information with the barcode scanner 451. That is, the mobile terminal 400 may read a barcode attached to or printed on merchandise, and may store the result of the reading thereof.

The mobile terminal 400 may include all kinds of terminals carried by a user and capable of conducting wireless communications and implementing various functions using application programs, such as a personal mobile communications services terminal, a personal digital assistant (PDA),a smart phone, a tablet PC, a laptop computer, a notebook computer, a wireless LAN terminal and the like.

Hereinafter, a method of changing the price information using the ESL system according to the embodiment will be described.

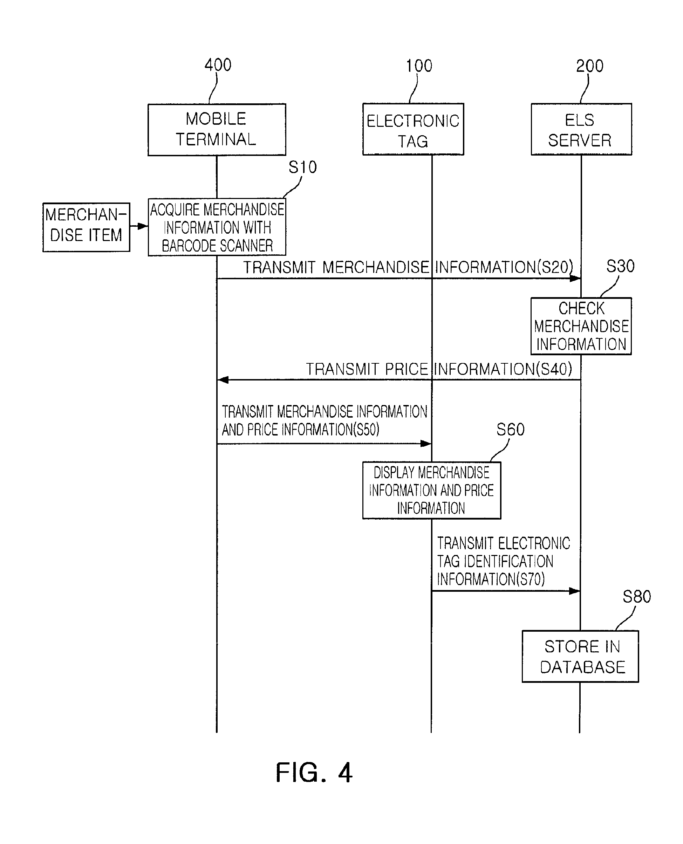

FIG. 4 is a flowchart illustrating the method of setting merchandise information according to the embodiment.

Referring to FIG. 4, the method of setting merchandise information according to the embodiment may include recognizing a barcode of merchandise using a mobile terminal 400, receiving, by the mobile terminal 400, price information corresponding to barcode information from an ESL server 200, communicating, by the mobile terminal 400, with an electronic tag 100 via local area communications and transmitting the merchandise information and price to the electronic tag 100, and registering the merchandise information and price with the ESL server 200.

Specifically, the method of assigning price information according to the embodiment includes acquiring merchandise information using the mobile terminal 400 (S10). This may be performed using a barcode scanner 451 provided in the mobile terminal 400.

Namely, the acquiring of the merchandise information may be performed in a manner that a store manager approaches the barcode scanner 451 of the mobile terminal 400 to a barcode of a merchandise item arranged (or to be arranged) on a display area near the electronic tag 100 so as to scan the barcode.

Then, the mobile terminal 400 may transmit the acquired merchandise information to the ESL server 200 (S20). Then, the ESL server 200 having received merchandise information extracts price information corresponding to the merchandise information (S30) and transmits the price to the mobile terminal 400 (S40).

Here, operations S20 to S40 may be performed in a manner that the mobile terminal 400 performs communications via a wireless network (e.g., Wi-Fi) between ESL servers 200. In this case, the mobile terminal 400 may directly be connected to the ESL server 200 without using a relay. Further, the mobile terminal 400 may acquire the information by directly connecting to the database without using the middleware of the ESL server 200.

In this embodiment, the mobile terminal 400 performs communications with the ESL server 200 in order to receive the price information corresponding to the merchandise information for each piece of the merchandise information. However, the present invention is not limited thereto but may be variously modified. For example, provided that the mobile terminal 400 has a plenty of storage capacity, the price information on all of the merchandise items may be stored in the storage unit 421 of the mobile terminal in advance, or all or some pieces of the price information may be acquired on one communications.

Once the price information is stored in the mobile terminal 400, then mobile terminal 400 communicates with the electronic tag 100 via local area communications, and the merchandise information and price information is transmitted to the electronic tag 100 (S50).

In this embodiment, the mobile terminal 400 may communicate with the electronic tag 100 using near field communications (NFC). Namely, the information in the mobile terminal 400 may be transmitted to the electronic tag 100 by simply bringing the mobile terminal 400 close to the electronic tag 100.

Then, the electronic tag 100 having received the merchandise information and price information stores the received information in the memory 121 therein, and displays the information on the merchandise (e.g., the name and price of the merchandise) via the display device 141 (S60).

Simultaneously, the electronic tag 100 may transmit identification information (the merchandise information and price information) to the ESL server 200 (S70). At this time, merchandise information and price information may also be transmitted.

Then, the ESL server 200 may receive the identification information of the electronic tag 100, check it, and store it in the database by matching with the merchandise information and price information (S80).

In the method of assigning price information to electronic shelf label tags thus configured, and the system thereof, the mobile terminal directly transmits the merchandise information and price information to the electronic tag using near field communications (NFC). Accordingly, the number of communications between the electronic tag and the ESL server can be minimized, such that the server can be prevented from being overloaded. Therefore, it is possible to overcome the problem that the speed is lowered due to overloaded server.

As set forth above, according to the embodiments of the present invention, the mobile terminal directly transmits the merchandise information and price information to the electronic tag using near field communications (NFC). Accordingly, the number of communications between the electronic tag and the ESL server can be minimized, such that the server can be prevented from being overloaded. Therefore, it is possible to overcome the problem in which the speed is lowered due to overloaded server.

While the present invention has been shown and described in connection with the embodiments, it will be apparent to those skilled in the art that modifications and variations can be made without departing from the spirit and scope of the invention as defined by the appended claims.

## Claims

1. An electronic shelf label system, comprising:
a mobile terminal acquiring merchandise information regarding a merchandise item;
an ESL server transmitting price information corresponding to the merchandise information to the mobile terminal; and
an electronic tag acquiring the price and the merchandise information from the mobile terminal to be displayed, and transmitting identification information to the ESL server.

2. The system of claim 1, wherein the mobile terminal transmits the merchandise information and the price information to the electronic tag using near field communications (NFC).

3. The system of claim 1, wherein the electronic tag transmits the identification information to the ESL server using local area wireless communications.

4. The system of claim 3, wherein the local area wireless communications is Zigbee communications.

5. The system of claim 1, wherein the mobile terminal communicates with the ESL server using Wi-Fi communications.

6. The system of claim 1, wherein the mobile terminal includes a barcode scanner to acquire the merchandise information.

7. A method for assigning price information to electronic shelf label tags, comprising:
acquiring, by a mobile terminal, merchandise information;
transmitting, by the mobile terminal, the merchandise information to an ESL server;
transmitting, by the ESL server, price information corresponding to the merchandise information to the mobile terminal;
transmitting, by the mobile terminal, the merchandise information and the price to an electronic tag; and
displaying, by the electronic tag, the merchandise information and the price information.

8. The method of claim 7, wherein the transmitting of the merchandise information and the price information is performed using near field communications (NFC).

9. The method of claim 7, further comprising transmitting, by the electronic tag, identification information to the ESL server using local area wireless communications.
